# EUROPEAN PATENT APPLICATION

(11) **EP 4 184 397 A1**
(43) Date of publication of application: **24.05.2023**
(21) Application number: 20945102.0
(22) Date of filing: 14.07.2020
(51) Int. Cl.: G06N 20/00

(54) **MACHINE LEARNING PROGRAM, MACHINE LEARNING METHOD, AND INFORMATION PROCESSING DEVICE**

(71) Applicant: FUJITSU LIMITED, Kawasaki-shi, Kanagawa 211-8588 (JP)
(72) Inventor: NORO, Tomoya, Kawasaki-shi, Kanagawa 211-8588 (JP)
(74) Representative: Hoffmann Eitle
(86) International application number: PCT/JP2020/027411
(87) International publication number: WO 2022/013954

(57) **Abstract**

A machine learning program of an embodiment causes a computer to execute processing of selecting, processing of generating a first machine learning model, and processing of generating a second training data group. The processing of selecting selects a plurality of data from a first training data group based on an appearance frequency of the same data with the same label attached included in the first training data group. The processing of generating a first machine learning model generates the first machine learning model by machine learning using the plurality of selected data. The processing of generating a second training data group generates the second training data group obtained by combining the first training data group and a result of outputting the first machine learning model in a case of inputting the data included in the first training data group.

## Description

### FIELD

Embodiments of the present invention relate to machine learning techniques.

### BACKGROUND

Conventionally, there is known a method of solving a classification task using a machine learning model generated by machine learning, the classification task (for example, part of speech estimation, named entity extraction, word sense determination, or the like of each word included in a sentence) determining which category input data belongs to in a predefined category aggregation when the input data is given.

Furthermore, there is also a machine learning method called stacking that executes machine learning using an output result by a first machine learning model for training data as an input to a second machine learning model. In general, it is known that inference accuracy of a plurality of machine learning models stacked using stacking that is a method of ensemble learning is better than inference accuracy of a single machine learning model.

In this stacking, for example, machine learning of the second machine learning model may be executed so as to correct an error in a determination result of the first machine learning model. As such an existing technique for generating training data for generating the second machine learning model, the training data is divided into k subsets, and a determination result is added to a remaining one subset using the first machine learning model generated with (k-1) subsets. Next, there is known a method of generating training data of the second machine learning model by repeating the operation of adding the determination result k times while replacing the subset to be added with the determination result.

### CITATION LIST

### NON-PATENT DOCUMENT

Non-Patent Document 1: Wu et al. N-fold Templated Piped Correction. Proc. of IJCNLP 2004

### SUMMARY

### [TECHNICAL PROBLEM]

However, in the above-described existing technique, k first machine learning models need to be created by repeating the processing k times while replacing the k divided subsets, which makes it difficult to efficiently perform machine learning.

In one aspect, an object is to provide a machine learning program, a machine learning method, and an information processing device capable of executing efficient machine learning.

### [SOLUTION TO PROBLEM]

In one idea, a machine learning program causes a computer to execute processing of selecting, processing of generating a first machine learning model, and processing of generating a second training data group. The processing of selecting selects a plurality of data from a first training data group based on an appearance frequency of the same data with the same label attached included in the first training data group. The processing of generating a first machine learning model generates the first machine learning model by machine learning using the plurality of selected data. The processing of generating a second training data group generates the second training data group obtained by combining the first training data group and a result of outputting the first machine learning model in a case of inputting the data included in the first training data group.

According to an aspect of the embodiments, a machine learning program that causes a computer to execute a process, the process includes selecting a plurality of data from a first training data group based on an appearance frequency of same data with a same label attached included in the first training data group; generating a first machine learning model by machine learning that uses the plurality of selected data; and generating a second training data group obtained by combining the first training data group and a result output by the first machine learning model in a case where the data included in the first training data group is input.

### [ADVANTAGEOUS EFFECTS OF INVENTION]

Efficient machine learning is executed.

### BRIEF DESCRIPTION OF DRAWINGS

FIG. 1 is an explanatory diagram for describing an outline of an embodiment;
FIG. 2 is an explanatory diagram for describing an existing example;
FIG. 3 is an explanatory diagram for describing an outline of an embodiment in a case of adding noise;
FIG. 4 is a block diagram illustrating a functional configuration example of an information processing device according to an embodiment;
FIG. 5A is an exemplary table for describing an example of a training data set;
FIG. 5B is an explanatory table for describing an example of appearance frequency data;
FIG. 5C is an explanatory table for describing an example of entropy data;
FIG. 5D is an explanatory table for describing an example of self-information amount data;
FIG. 5E is an explanatory table for describing an example of score data;
FIG. 6A is a flowchart illustrating an example of training data stability determination processing;
FIG. 6B is a flowchart illustrating an example of the training data stability determination processing;
FIG. 7 is a flowchart illustrating a modification of the training data stability determination processing;
FIG. 8 is an explanatory diagram for describing an outline of determination method selection processing;
FIG. 9 is a flowchart illustrating an example of the determination method selection processing;
FIG. 10A is a flowchart illustrating a processing example regarding addition of a determination result;
FIG. 10B is an explanatory table for describing an example of result data;
FIG. 11A is a flowchart illustrating a processing example regarding addition of a determination result;
FIG. 11B is an explanatory table for describing an example of result data;
FIG. 12A is a flowchart illustrating a processing example regarding addition of a determination result;
FIG. 12B is an explanatory table for describing an example of result data; and
FIG. 13 is a block diagram illustrating an example of a computer configuration.

### DESCRIPTION OF EMBODIMENTS

Hereinafter, a machine learning program, a machine learning method, and an information processing device according to an embodiment will be described with reference to the drawings. Configurations having the same functions in the embodiments are denoted with the same reference numerals, and redundant description will be omitted. Note that the machine learning program, the machine learning method, and the information processing device described in the following embodiment are merely examples, and do not limit the embodiment. Furthermore, each of the embodiments below may be appropriately combined unless otherwise contradicted.

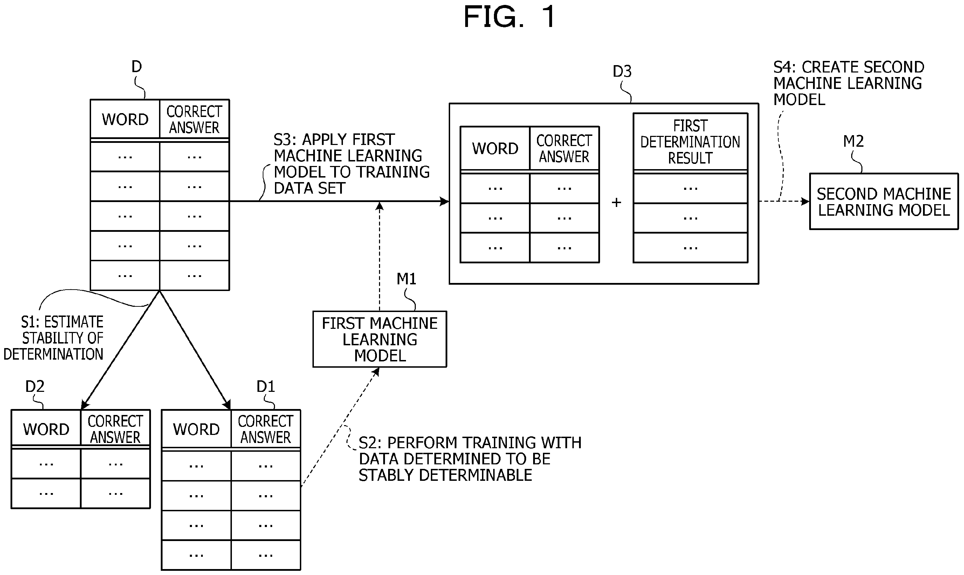

FIG. 1 is an explanatory diagram for describing an outline of an embodiment. As illustrated in FIG. 1, in the present embodiment, a first machine learning model M1 and a second machine learning model M2 that are machine-learned using a stacking method are generated by machine learning using a training data set D, the first machine learning model M1 and the second machine learning model M2 being used to solve a classification task that assigns a "named entity label" that indicates a named entity to each word (partial character string) in a sentence.

Note that the classification task is not limited to the above-described example, and may be word part of speech estimation or word sense determination. Furthermore, the classification task may be any classification task as long as the classification task is solved using a machine learning model generated by machine learning, and the classification task may classify presence or absence of body abnormality according to biological data such as blood pressure, heart rate, or the like, or may classify pass or fail of a target person (examinee) according to performance data such as evaluation of each subject and scores of midterm and final exams, in addition to the classification regarding words in a document. Therefore, data (hereinafter referred to as cases) included in the training data set used to generate the machine learning model may be cases as learning targets according to the classification task. For example, in a case of generating a machine learning model that classifies the presence or absence of body abnormality, biological data for each learning target, a correct answer (the presence or absence of body anomaly) for the biological data, and the like are included in each case.

In the training data set D, each case (for example, each word in a sentence) is given a correct label indicating the correct "named entity label" in that case. In the present embodiment, the first machine learning model M1 and the second machine learning model M2 such as a gradient boosting tree (GBT), a neural network, or the like are generated by performing supervised learning using the training data set D.

Specifically, in the present embodiment, for each case included in the training data set D, stability of determination by the machine learning model using the training data set D is estimated based on a frequency (appearance frequency) at which a case with the same content with the same correct label given appears in all the cases (S1). The frequency may be an absolute frequency, a relative frequency, or a cumulative frequency. Furthermore, the stability of each case may be estimated based on a ratio calculated based on the appearance frequency. Furthermore, the "case with the same content" is the same data with the same label attached, and in the present embodiment, it is assumed that the stability is estimated based on such an appearance frequency for each data.

The stability of determination by the machine learning model using the training data set D for each case included in the training data set D means that each case can be stably determined by the machine learning model using the training data set D. For example, in the case that can be stably determined, it is estimated that the same determination result can be obtained by the machine learning model obtained regardless of how the training data set D is divided and trained in k-fold cross-validation. Since the case that can be stably determined correspond to a case in which there are many cases with the same content with the same correct label given in the training data set D, or a case in which ambiguity of a classification destination category is low, it can be estimated based on the appearance frequency of the case with the same content with the same correct label given. Conversely, a case with an unstable determination result is a case in which a different determination result is presumed to be obtained depending on a division method in the k-fold cross-validation. Since the case with an unstable determination result correspond to a case in which there are few cases with the same content in the training data set D, or a case in which the ambiguity of the classification destination category is high, it can be estimated based on the appearance frequency of the case with the same content with the same correct label given.

In the present embodiment, the training data set D is divided into a training data set D1 in which the case that can be stably determined is selected and a training data set D2 other than the training data set D1 based on the estimation result in S1. Next, in the present embodiment, machine learning is performed using data (training data set D1) determined to be stably determinable to generate the first machine learning model M1 (S2). Next, in the present embodiment, each data included in the training data set D is input to the first machine learning model M1, and a first determination result output by the first machine learning model M1 is added to the training data set D to generate a training data set D3 (S3). Next, in the present embodiment, machine learning is performed using the training data set D3 to generate the second machine learning model M2.

In the first machine learning model M1 generated by the machine learning using data estimated to be stably determinable based on the appearance frequency, a result (an error of the determination result) different from the correct label is more easily obtained in the case estimated to be unstable in the first determination result in a case of inferring the training data set D as input data. Therefore, the training data set D3 obtained by adding the first determination result to the training data set D is suitable to generate the second machine learning model M2 that outputs a final determination result so as to correct an error of the first machine learning model M1.

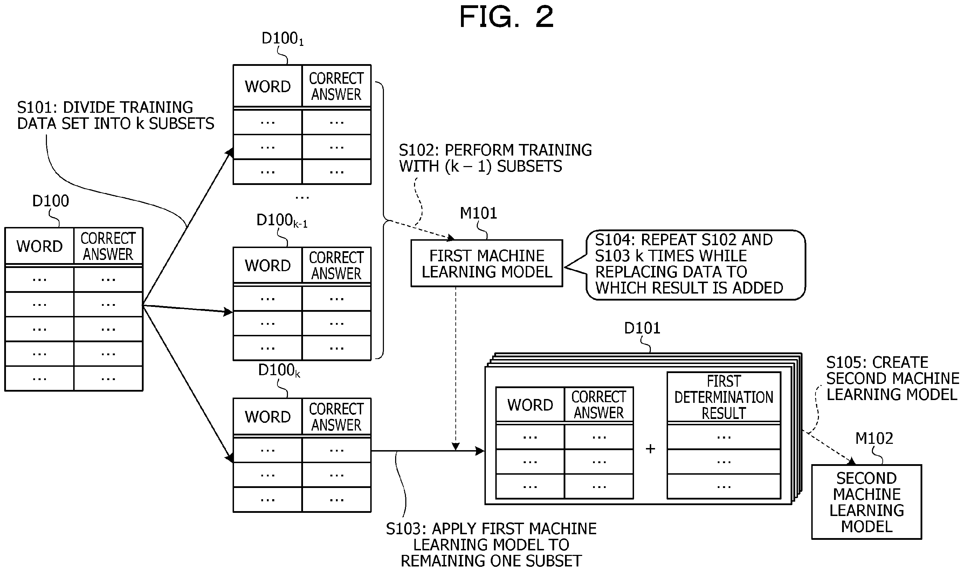

FIG. 2 is an explanatory diagram for describing an existing example. As illustrated in FIG. 2, in the existing example, a training data set D100 is divided into k subsets (D100₁, ..., D100ₖ₋₁, D100ₖ) (S101), and training is performed with (k-1) subsets to generate a first machine learning model M101 (S102). Next, in the existing example, a determination result inferred and obtained by the first machine learning model M101 with the remaining one subset as input is added to the subset (S103). In the existing example, a training data set D101 of a second machine learning model M102 is generated by repeating S102 and S103 k times while replacing the data to which the determination result is added in this manner (S104). Next, in the existing example, the second machine learning model M102 is created by machine learning using the created training data set D101 (S105).

In this way, in the existing example, in the process of generating the training data set D101 of the second machine learning model M102, the processing is repeated k times while replacing the k divided subsets (D100₁, ..., D100ₖ₋₁, D100ₖ), whereby k first machine learning models M101 are created. In contrast, in the present embodiment, for example, the training data set D3 of the second machine learning model M2 can be efficiently created without creating a plurality of machine learning models M1, and efficient machine learning can be executed. Furthermore, an amount of data to which correct flags are given is smaller than a simple method of preparing a training data set for each of the first machine learning model M1 and the second machine learning model M2 in advance. Therefore, the machine learning can be efficiently executed.

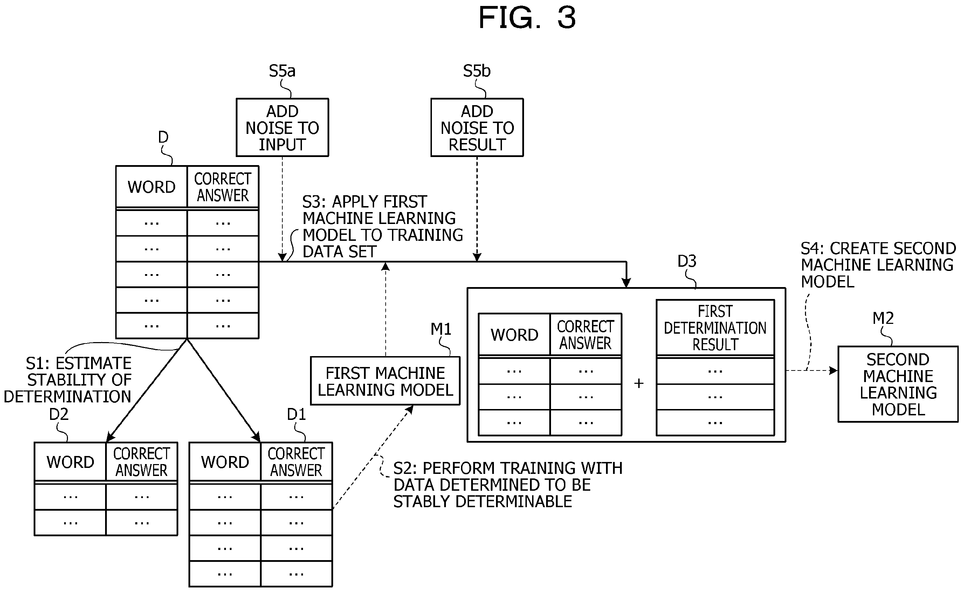

FIG. 3 is an explanatory diagram for describing an outline of an embodiment in a case of adding noise. As illustrated in FIG. 3, when the first determination result of applying the first machine learning model M1 the training data set D is added to the training data set D to generate the training data set D3 of the second machine learning model M2, noise may be added, Specifically, the first determination result obtained by adding noise to the input of the first machine learning model M1 may be added to the training data set D (S5a). Alternatively, noise may be added to the result output by the first machine learning model M1, applying the first machine learning model M1 to the training data set D, and the result may be added to the training data set D (S5b).

When noise is added in this way, the case in which the result less easily changes even if the noise is added can be stably determined by the first machine learning model M1, and the case in which the determination result easily changes when the noise is added has an unstable determination result of the first machine learning model M1. Therefore, it is possible to generate the training data set D3 for generating the second machine learning model M2 so as to correct an error in the determination result of the first machine learning model M1 and to improve the accuracy of the final determination result by the second machine learning model M2 by adding the first determination result by the first machine learning model M1 to the training data set D.

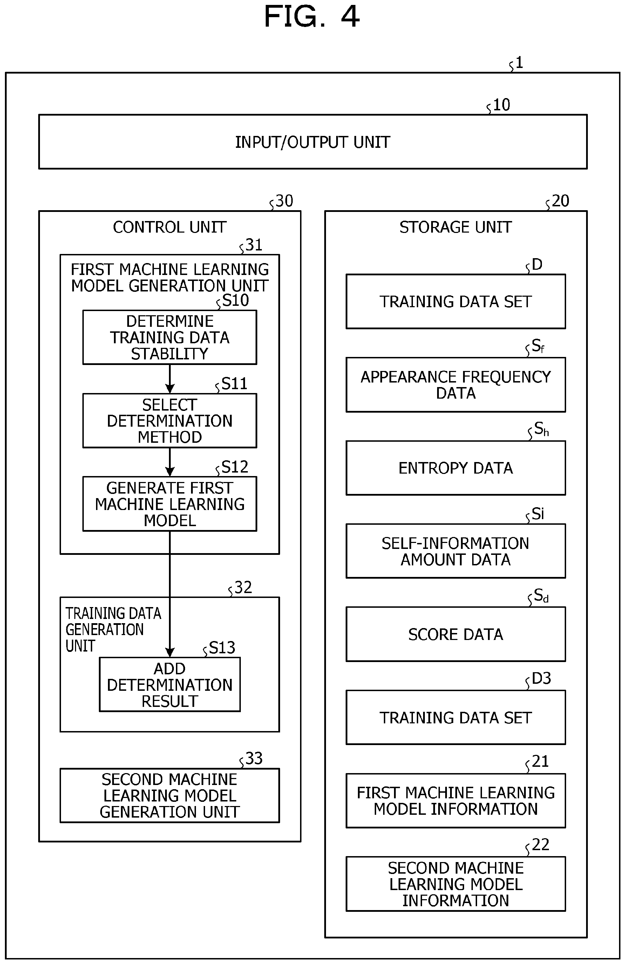

FIG. 4 is a block diagram illustrating a functional configuration example of the information processing device according to an embodiment. As illustrated in FIG. 4, an information processing device 1 has an input/output unit 10, a storage unit 20, and a control unit 30. For example, a personal computer (PC) or the like may be applied as the information processing device 1.

The input/output unit 10 serves as an input/output interface when the control unit 30 inputs/outputs various types of information. For example, the input/output unit 10 serves as an input/output interface with an input device such as a keyboard and a microphone connected to the information processing device 1 and a display device such as a liquid crystal display device. Furthermore, the input/output unit 10 also serves as a communication interface for data communication with an external device connected via a communication network such as a local area network (LAN).

For example, the information processing device 1 receives an input such as the training data set D via the input/output unit 10 and stores the input in the storage unit 20. Furthermore, the information processing device 1 reads first machine learning model information 21 and second machine learning model information 22 regarding the generated first machine learning model M1 and second machine learning model M2 from the storage unit 20, and outputs the read information to the outside via the input/output unit 10.

The storage unit 20 is implemented by, for example, a semiconductor memory element such as a random access memory (RAM) or a flash memory, or a storage device such as a hard disk drive (HDD). The storage unit 20 stores the training data set D, appearance frequency data Sf, entropy data Sₕ, self-information amount data Sᵢ, score data S_{d}, the training data set D3, the first machine learning model information 21, the second machine learning model information 22, and the like.

The training data set D is an aggregation of a plurality of training data for a set of a case as a learning target (for example, each word included in each of a plurality of sentences), and a correct label given to the case (for example, a "named entity label") (a pair of the case and the correct label). Note that the training data is data in units of one sentence, and is assumed to include pairs of a plurality of cases and correct labels.

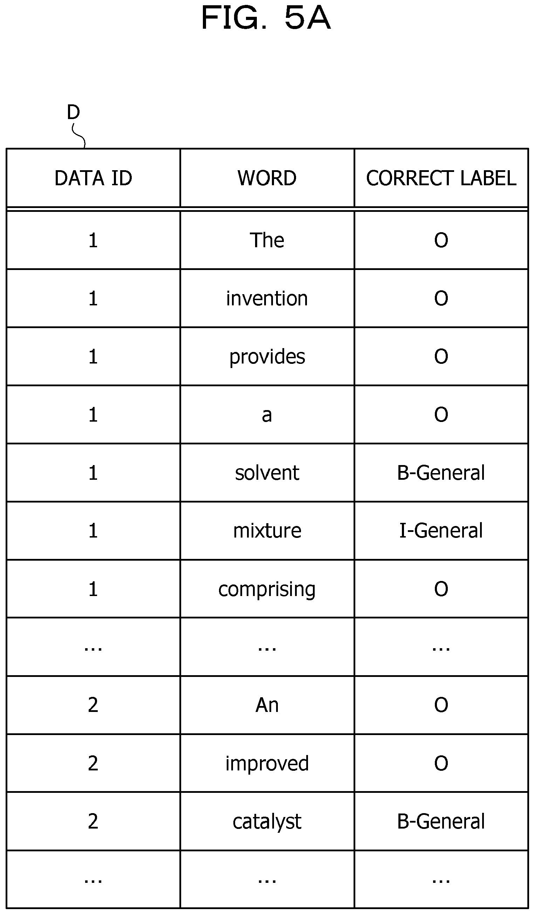

FIG. 5A is an exemplary table for describing an example of the training data set D. As illustrated in FIG. 5A, the training data set D includes, for each data ID corresponding to the training data of each of a plurality of sentences, a set of a word included in the sentence and a correct label ("named entity label") given to the word, that is, a pair of a case and a correct label.

The "named entity label" includes "O", "General", or "Molecular". "O" is a label that means a word that is not a named entity (partially inclusive). "General" is a label that means a word of a named entity (partially inclusive) of type "General". "Molecular" is a label that means a word of a named entity (partially inclusive) of type "Molecular". Note that it is assumed that in "General" and "Molecular", the first word is prefixed with "B-", and the second and subsequent words are prefixed with "I-".

For example, in the training data set D in the illustrated example, the named entity of the type "General" is correct for a case of "solvent mixture". Furthermore, the named entity of the type "Molecular" is correct for a case of "n-propyl bromide".

Returning to FIG. 4, the appearance frequency data Sf is data obtained by totaling the appearance frequencies of pairs of cases and correct labels included in the training data set D.

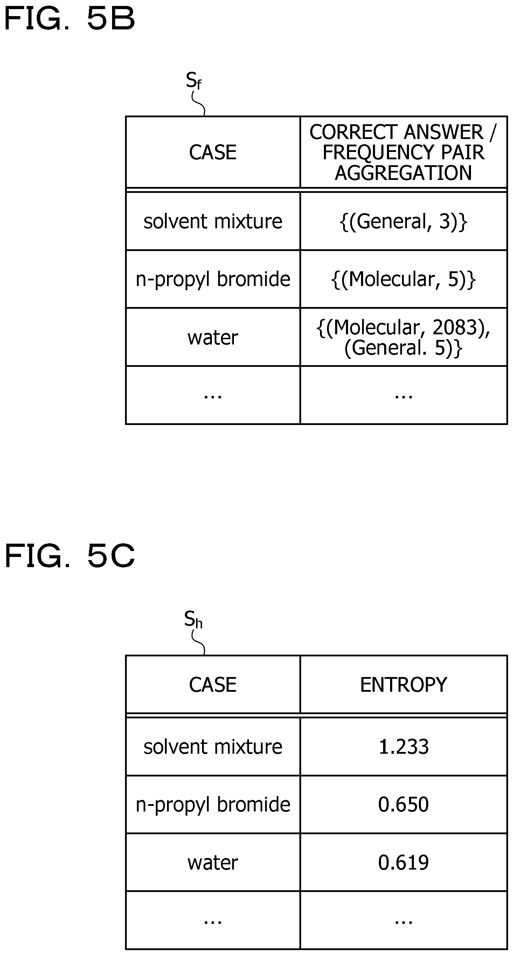

FIG. 5B is an explanatory table for describing an example of the appearance frequency data Sf. As illustrated in FIG. 5B, the appearance frequency data Sf includes the appearance frequency totaled for each correct label for each case included in the training data set D. More specifically, the appearance frequency data S_{f} includes the appearance frequency totaled for each case with the same content and each same correct label. For example, for the case of "solvent mixture", the appearance frequency of the correct label "General" is 3. Similarly, for the case of "n-propyl bromide", the appearance frequency of the correct label "Molecular" is 5. Furthermore, for a case of "water", the appearance frequency of the correct label "Molecular" is 2083, and the appearance frequency of the correct label "General" is 5.

Returning to FIG. 4, for each case included in the training data set D, the entropy data Sₕ indicates entropy in an information theory calculated based on the total number of cases included in the training data set D, the appearance frequency totaled for each case with the same content and each same correct label, and the like.

FIG. 5C is an explanatory table for describing an example of the entropy data Sₕ. As illustrated in FIG. 5C, the entropy data Sₕ indicates the entropy of each case such as "solvent mixture", "n-propyl bromide", or "water".

Returning to FIG. 4, the self-information amount data Sᵢ indicates a self-information amount calculated based on the total number of cases included in the training data set D, the appearance frequency for each case with the same content and each same correct label, and the like.

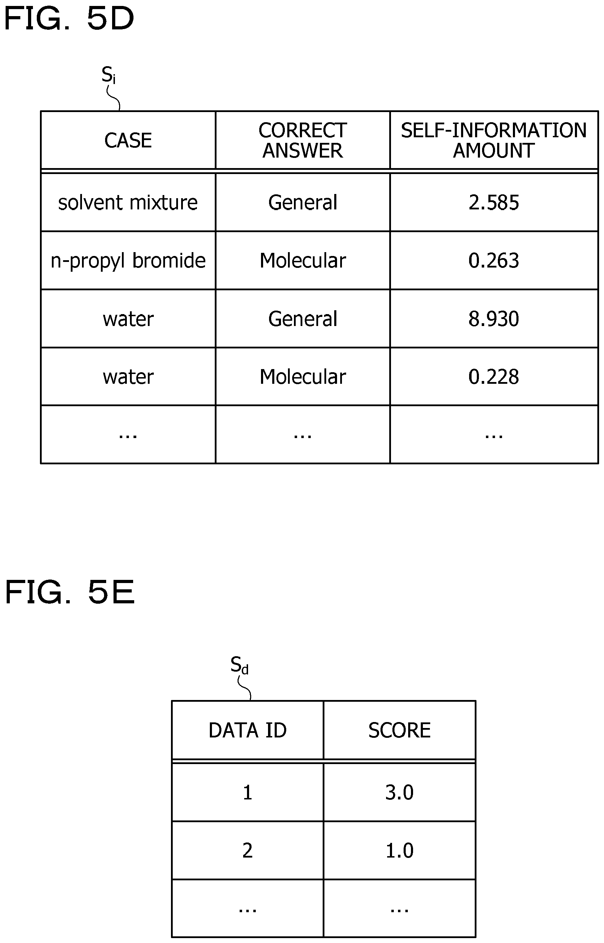

FIG. 5D is an explanatory table for describing an example of the self-information amount data Sᵢ. As illustrated in FIG. 5D, the self-information amount data Sᵢ indicates the self-information amount for each case with the same content and each same correct label such as "solvent mixture" and "General", or °n-propyl bromide" and "Molecular".

Returning to FIG. 4, the score data S_{d} is data obtained by scoring the above-described stability of determination for each sentence included in the training data set D.

FIG. 5E is an explanatory table for describing an example of the score data S_{d}. As illustrated in FIG. 5E, the score data S_{d} indicates the score for the stability of determination for each data ID corresponding to each of the plurality of sentences included in the training data set D.

Returning to FIG. 4, the first machine learning model information 21 is information regarding the first machine learning model M1 generated by performing supervised learning. The second machine learning model information 22 is information regarding the second machine learning model M2 generated by performing supervised learning. The first machine learning model information 21 and the second machine learning model information 22 are, for example, parameters for constructing a model such as a gradient boosting tree or a neural network.

The control unit 30 has a first machine learning model generation unit 31, a training data generation unit 32, and a second machine learning model generation unit 33. The control unit 30 can be implemented by a central processing unit (CPU), a micro processing unit (MPU), or the like. Furthermore, the control unit 30 can be realized by a hard wired logic such as an application specific integrated circuit (ASIC), a field programmable gate array (FPGA), or the like.

The first machine learning model generation unit 31 is a processing unit that generates the first machine learning model M1 using the training data set D. Specifically, the first machine learning model generation unit 31 selects a plurality of cases from the training data set D based on the appearance frequency of each case with the same content given the same correct label included in the training data set D. Therefore, the first machine learning model generation unit 31 obtains the training data set D1 in which a case that can be stably determined is selected from the training data set D. Next, the first machine learning model generation unit 31 generates the first machine learning model M1 by machine learning using the plurality of cases included in the training data set D1. Next, the first machine learning model generation unit 31 stores the first machine learning model information 21 regarding the generated first machine learning model M1 in the storage unit 20.

The training data generation unit 32 is a processing unit that generates the training data set D3 for generating the second machine learning model M2. Specifically, the training data generation unit 32 constructs the first machine learning model M1 based on the first machine learning model information 21. Next, the training data generation unit 32 adds a result output by the first machine learning model M1 in a case of inputting data to the first machine learning model M1 in which each case included in the training data set D is constructed to the training data set D to generate the training data set D3.

The second machine learning model generation unit 33 is a processing unit that generates the second machine learning model M2 using the training data set D3. Specifically, the second machine learning model generation unit 33 generates the second machine learning model M2 by machine learning using each case included in the training data set D3 and the determination result of the first machine learning model M1 for the case (the result output by the first machine learning model M1). Next, the second machine learning model generation unit 33 stores the second machine learning model information 22 regarding the generated second machine learning model M2 in the storage unit 20.

Here, details of the processing of the first machine learning model generation unit 31 and the training data generation unit 32 will be described. First, the first machine learning model generation unit 31 performs training data stability determination processing of calculating the score indicating the stability of the determination result of each case and obtaining the training data set D1 based on the appearance frequency of each case in the training data set D (S10).

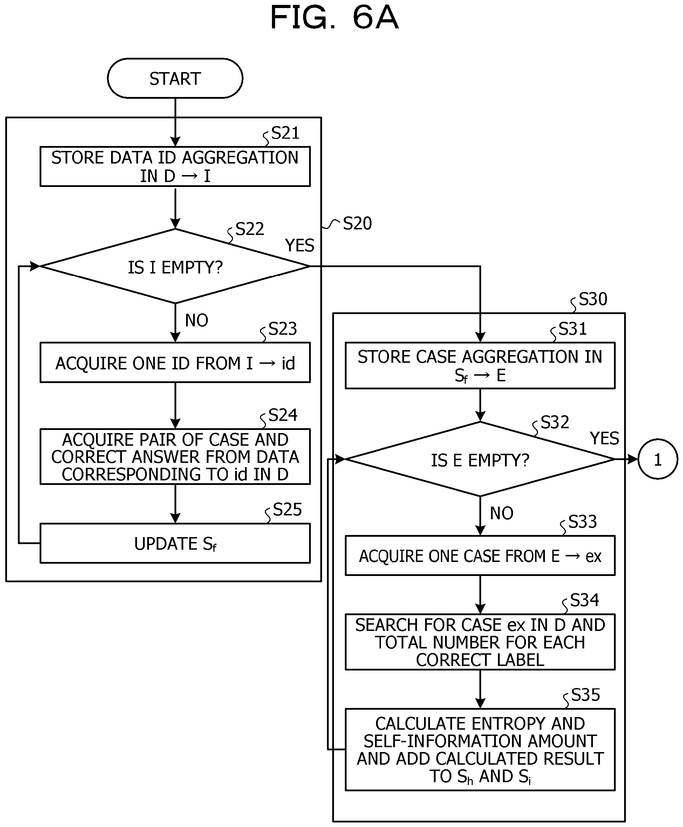

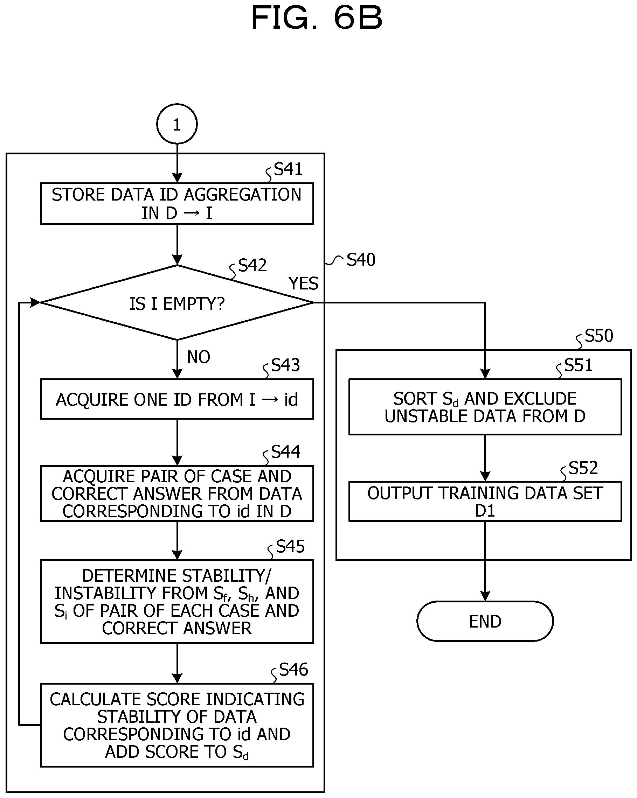

FIGs. 6A and 6B are flowcharts illustrating an example of the training data stability determination processing. As illustrated in FIG. 6A, when the processing is started, the first machine learning model generation unit 31 performs processing of collecting pairs of cases and correct labels from the training data set D, and totaling their appearance frequencies (S20).

Specifically, the first machine learning model generation unit 31 stores an aggregation of the data IDs in the training data set D in a processing array (I) or the like (S21). Next, the first machine learning model generation unit 31 determines whether the data ID in the array (I) is empty (S22) and repeats processing of S23 to S25 until the data ID is determined to be empty (S22: Yes).

In a case where the data ID in the array (I) is determined not to be empty (S22: No), the first machine learning model generation unit 31 acquires one data ID from the array (I) and stores the acquired data ID in a processing variable (id) (S23). At this time, the first machine learning model generation unit 31 deletes the acquired data ID from the array (I). Next, the first machine learning model generation unit 31 acquires a pair of the case with the same content and the same correct label from the data corresponding to the variable (id) in the training data set D (S24), and updates the appearance frequency data S_{f} based on the acquired number (appearance frequency) (S25).

in a case where the data ID in the array (I) is determined to be empty (S22: Yes), the first machine learning model generation unit 31 performs processing of calculating the entropy for each collected case and the self-information amount for each case with the same content and each same correct label (S30).

Specifically, the first machine learning model generation unit 31 stores a case aggregation in the appearance frequency data S_{f} in a processing array (E) or the like (S31). Next, the first machine learning model generation unit 31 determines whether the case in the array (E) is empty (S32) and repeats processing of S33 to S35 until the case is determined to be empty (S32: Yes).

In a case where the case in the array (E) is determined not to be empty (S32: No), the first machine learning model generation unit 31 selects one case from the array (E) and stores the acquired case in a processing variable (ex) (S33). At this time, the first machine learning model generation unit 31 deletes the acquired case from the array (E). Next, the first machine learning model generation unit 31 searches for cases corresponding to the variable (ex) in the training data set D, and totals the number of the cases for each correct label (S34). Next, the first machine learning model generation unit 31 calculates the entropy and the self-information amount in a known information theory for the pair of the case to be processed and the correct label based on the aggregation result of S34, and updates the entropy data Sₕ and the self-information amount data Sᵢ based on the calculation result (S35).

In a case where the case in the array (E) is determined to be empty (S32: Yes), as illustrated in FIG. 6B, the first machine learning model generation unit 31 performs processing of estimating the above-described stability of determination for each case with the same content and each same correct label (S40).

Specifically, the first machine learning model generation unit 31 stores the aggregation of data IDs in the training data set D in the processing array (I) or the like (S41). Next, the first machine learning model generation unit 31 determines whether the data ID in the array (I) is empty (S42) and repeats processing of S43 to S46 until the data ID is determined to be empty (S42: Yes).

In a case where the data ID in the array (I) is determined not to be empty (S42: No), the first machine learning model generation unit 31 acquires one data ID from the array (I) and stores the acquired data ID in the processing variable (id) (S43). At this time, the first machine learning model generation unit 31 deletes the acquired data ID from the array (I).

Next, the first machine learning model generation unit 31 acquires a pair of the case with the same content and the same correct label from the data corresponding to the variable (id) in the training data set D (S44). In other words, the first machine learning model generation unit 31 acquires a pair for each case with the same content regarding the sentence of the data ID and each same correct label. Next, the first machine learning model generation unit 31 determines the stability or instability for the above-described stability of determination in each case with the same content and each correct label based on the appearance frequency data Sf, the entropy data Sₕ, and the self-information amount data Sᵢ of the acquired pair for each case with the same content and each correct label (S45).

For example, the first machine learning model generation unit 31 treats a pair of a rare case having the appearance frequency less than a threshold (f) and the correct label in the training data set D, as an unstable case. Alternatively, the first machine learning model generation unit 31 treats a pair of a case with high ambiguity having the self-information amount larger than a threshold (i) and the entropy less than a threshold (h) and the correct label, as an unstable case. Furthermore, pair of cases and correct labels that do not satisfy the above conditions are treated as stable cases. Note that the thresholds (f), (i), and (h) regarding this determination may be arbitrarily set by a user, for example.

As an example, when the thresholds are f = 4, i = 1.0, and h = 0.8, respectively, "solvent mixture" and "General" is an unstable case in the appearance frequency data S_{f} of FIG. 5B. Similarly, "water" and "General" is an unstable case in the entropy data Sₕ of FIG. 5C and the self-information amount data Sᵢ of FIG. 5D.

Next, the first machine learning model generation unit 31 calculates the score indicating the stability of the data (sentence) corresponding to the variable (id) based on the stability/instability result determined for each case with the same content regarding the sentence of the data ID and each correct label, and adds the calculation result to the score data S_{d} (S46). For example, the first machine learning model generation unit 31 uses the number of unstable cases or a ratio of unstable cases to the total number as an index value, and calculates the score by performing weighting according to the index value.

In a case where the data ID in the array (I) is determined to be empty (S42: Yes), the first machine learning model generation unit 31 performs processing of setting a data set of remaining sentences obtained by excluding sentences with low stability as the training data set D1 for generating the first machine learning model M1 based on the score data S_{d} (S50).

Specifically, the first machine learning model generation unit 31 sorts the score data S_{d} and excludes unstable data (sentences) with low scores from the training data set D (S51). Next, the first machine learning model generation unit 31 outputs the remaining data set as the training data set D1 (S52) and terminates the processing. Note that the first machine learning model generation unit 31 may select and exclude some cases (for example, a pair of the case determined as an unstable case and the correct label) included in the sentence, other than excluding the unstable data (sentences) with low scores.

Note that the training data set D1 for generating the first machine learning model M1 may be selected from the training data set D by performing different processing (another selection method) for S30 and S40 described above.

Specifically, the first machine learning model generation unit 31 sets each self-information amount as an initial value of the score representing the stability of the collected pair of each case and the correct label, and repeats the following procedures (-) a prespecified number of times. Next, first machine learning model generation unit 31 sets the remaining training data set as the training data set D1 for the first machine learning model M1.

-For each sentence, a sum of the scores of the cases that appear is set as the score of that sentence, and the sentence with the maximum score is excluded as the sentence with low stability.

-The score of the case included in the excluded sentence is set for "the self-information amount/(N + 1)" (N is the number of times the relevant case has appeared in all the excluded sentences).

In this another selection method, the first machine learning model generation unit 31 may repeat the processing until the maximum value among the scores of each sentence falls below a prespecified threshold, instead of repeating the processing the prespecified number of times.

In the above-described another selection method, by lowering the score of the case included in the excluded sentence, the sentence containing the same case is less likely to be excluded. In other words, the same case is included in both the excluded sentence and the retained sentence. Note that, regarding the score calculation method, in the above example, the self-information amount is divided by N + 1, but any calculation method can be used as long as the score is updated to decrease each time excluded.

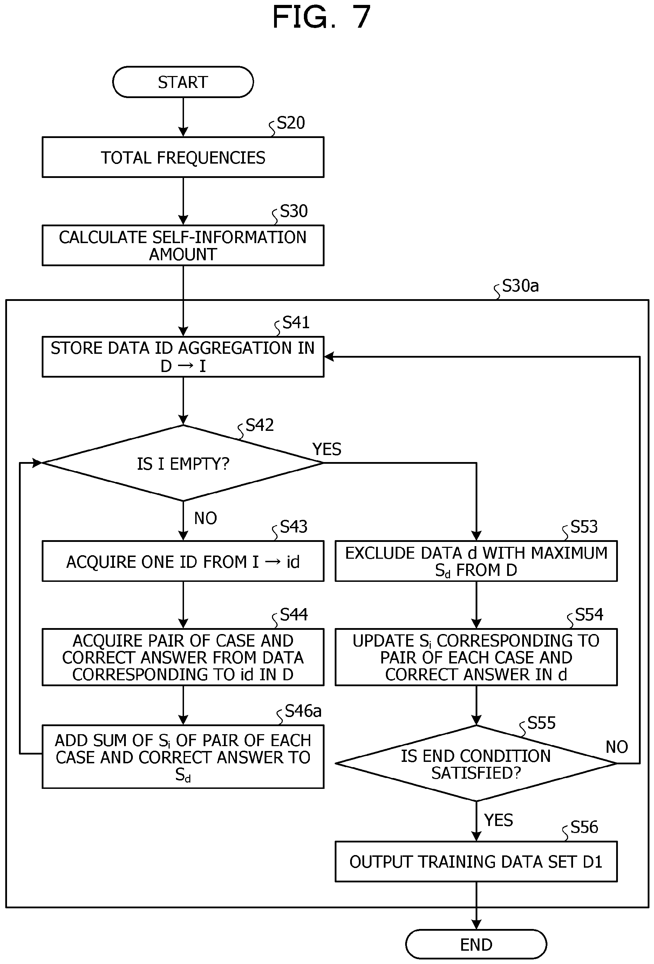

FIG. 7 is a flowchart illustrating a modification of the training data stability determination processing, and is an example of another selection method of the above description. As illustrated in FIG. 7, when the processing is started, the first machine learning model generation unit 31 performs processing regarding the another selection method (S30a) after performing the processing of totaling the frequency (appearance) (S20) and the processing of calculating the self-information amount (S30).

Specifically, the first machine learning model generation unit 31 stores the aggregation of data IDs in the training data set D in the processing array (I) or the like (S41). Next, the first machine learning model generation unit 31 determines whether the data ID in the array (I) is empty (S42) and repeats processing of S43 to S46a until the data ID is determined to be empty (S42: Yes).

In a case where the data ID in the array (I) is determined not to be empty (S42: No), the first machine learning model generation unit 31 acquires one data ID from the array (I) and stores the acquired data ID in the processing variable (id) (S43). At this time, the first machine learning model generation unit 31 deletes the acquired data ID from the array (I).

Next, the first machine learning model generation unit 31 acquires a pair of the case and the correct label from the data corresponding to the variable (id) in the training data set D (S44). In other words, the first machine learning model generation unit 31 acquires a pair for each case with the same content regarding the sentence of the data ID and each same correct label. Next, the first machine learning model generation unit 31 obtains the score Sᵢ for the pair of each case and the correct label using the above-described score calculation method, and adds the sum to the score data S_{d} (S46a).

In a case where the data ID in the array (I) is determined to be empty (S42: Yes), the first machine learning model generation unit 31 excludes the data d with the maximum score data S_{d} from the training data set D (S53). Next, the first machine learning model generation unit 31 updates the score Sᵢ corresponding to the pair of each case and the correct label in the excluded data d (S54), and determines whether an end condition of the above-described repetition is satisfied (S55).

In a case where the end condition of repetition (for example, the processing is repeated a prespecified number of times, the maximum value in the scores of the sentence falls below a prespecified threshold, or the like) is not satisfied (S55: No), the first machine learning model generation unit 31 returns the processing to S41. In a case where the end condition of repetition is satisfied (S55: Yes), the first machine learning model generation unit 31 outputs the remaining data set as the training data set D1 (S56) and terminates the processing.

Returning to FIG. 4, the first machine learning model generation unit 31 performs determination method selection processing for selecting a determination method from a plurality of determination methods after S10 (S11). Specifically, in the determination method selection processing, which method among the plurality of selection methods in S10 is adopted is determined. Note that the determination method selection processing is performed in a case where the plurality of selection methods has been performed in S10, and is skipped in a case where one selection method has been performed in S10.

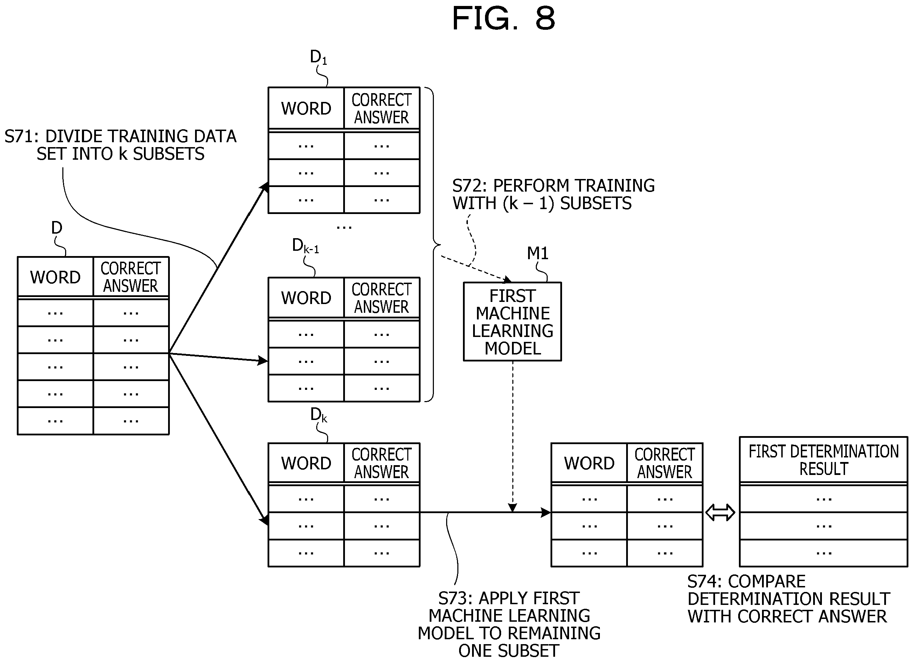

FIG. 8 is an explanatory diagram for describing an outline of the determination method selection processing. As illustrated in FIG. 8, in the determination method selection processing, the training data set D is divided into k subsets (D₁, ..., Dₖ₋₁, Dₖ) (S71), and training is performed with (k-1) subsets to generate the first machine learning model M1 (S72). Next, the determination result obtained by applying the first machine learning model M1 to the remaining one subset is compared with the correct answer (S73), and the score of each sentence is calculated and sorted (a matching rate with the correct answer, a correct answer score, or the like). Next, the sorted result is compared with the determination results obtained by the plurality of determination methods, and the optimum determination method is selected using average precision or the like.

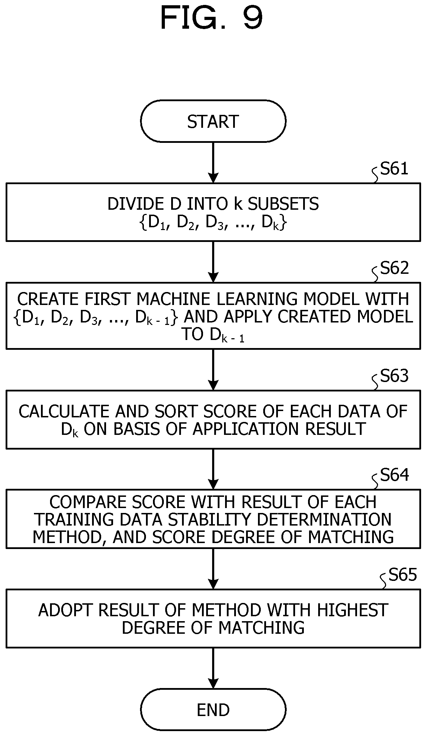

FIG. 9 is a flowchart illustrating an example of the determination method selection processing. As illustrated in FIG. 9, when the processing is started, the first machine learning model generation unit 31 divides the training data set D into k subsets (S61). Next, the first machine learning model generation unit 31 generates the first machine learning model M1 with {D₁, ..., Dₖ₋₁} and applies Dₖ to the generated first machine learning model M1 (S62).

Next, the first machine learning model generation unit 31 calculates and sorts the score of each data of Dₖ based on the application result (S63). Next, the first machine learning model generation unit 31 compares the result of each stability determination method (selection method in S10) in each training data with the score, and scores the degree of matching (S64). Next, the first machine learning model generation unit 31 adopts the result of the method (selection method) with the highest degree of matching among the plurality of selection methods performed in S10 (S65).

Returning to FIG. 4, the first machine learning model generation unit 31 generates the first machine learning model M1 by machine learning using the plurality of cases included in the training data set D1 after S11 (S12) and stores the first machine learning model information 21 regarding the generated first machine learning model M1 in the storage unit 20.

Next, the training data generation unit 32 constructs the first machine learning model M1 based on the first machine learning model information 21, and adds the determination result output by the first machine learning model M1 in the case of inputting data to the first machine learning model M1 in which each case included in the training data set D is constructed to the training data set D (S13). Therefore, the training data generation unit 32 generates the training data set D3.

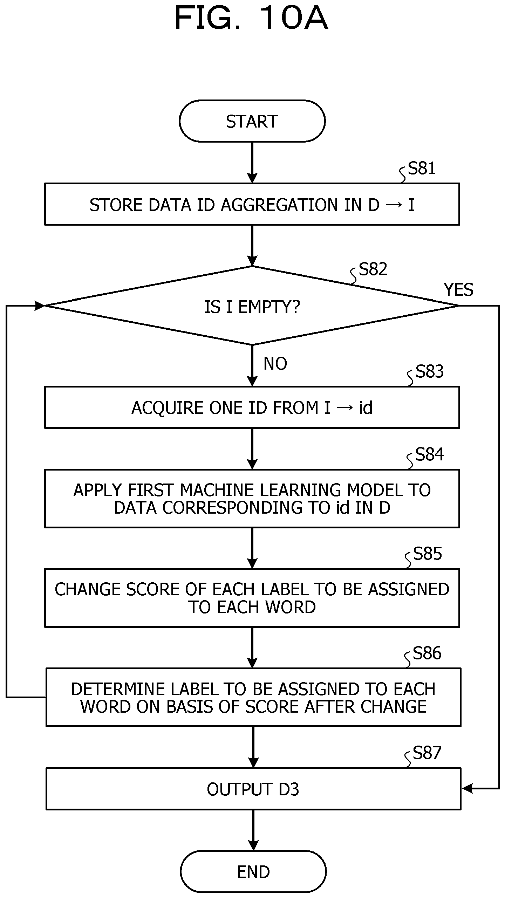

Here, a case of adding noise when generating the training data set D3 of the second machine learning model M2 will be described. FIG. 10A is a flowchart illustrating a processing example regarding addition of a determination result, and is an example of a case of adding noise to the result output by the first machine learning model M1.

As illustrated in FIG. 10A, when the processing is started, the training data generation unit 32 stores the aggregation of data IDs in the training data set D in the processing array (I) or the like (S81). Next, the training data generation unit 32 determines whether the data ID in the array (I) is empty (S82) and repeats processing of S83 to S86 until the data ID is determined to be empty (S82: Yes).

In a case where the data ID in the array (I) is determined not to be empty (S82: No), the training data generation unit 32 acquires one data ID from the array (I) and stores the acquired data ID in the processing variable (id) (S83). At this time, the training data generation unit 32 deletes the acquired data ID from the array (I).

Next, the training data generation unit 32 applies the first machine learning model M1 to the data corresponding to the variable (id) in the training data set D (S84). Next, the training data generation unit 32 randomly changes the score of each label assigned to each word (case) with respect to the determination result obtained from the first machine learning model M1 (S85). Next, the training data generation unit 32 determines the label to be assigned to each word based on the score after the change (S86).

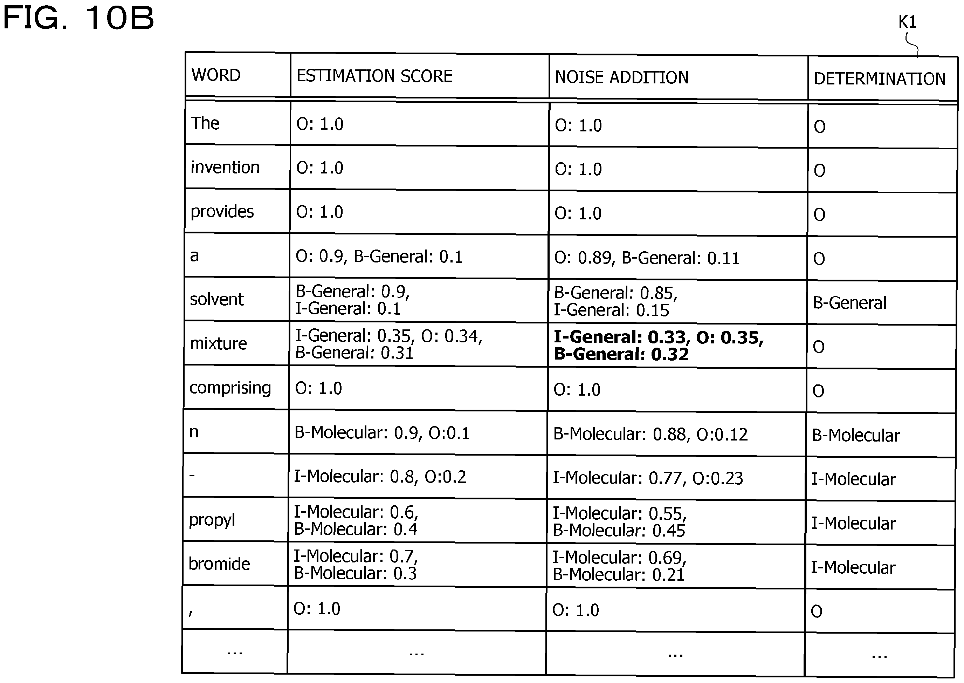

FIG. 10B is an explanatory table for describing an example of result data. Result data K1 in FIG. 10B is a data example in the case where the labels are determined after the score is randomly changed in S85.

As illustrated in FIG. 10B, in the result data K1, random noise is added to an estimation score included in the determination result obtained from first machine learning model M1, so the score value changes. Therefore, in S86, in some cases, a different determination result is obtained from a case where the score is not changed. For example, "mixture" is determined to be "I-General" before the score change, but is determined to be "O" due to the score change.

Returning to FIG. 10A, in a case where the data ID in the array (I) is determined to be empty (S82: Yes), the training data generation unit 32 outputs the training data set D3 obtained by adding the label determined for each case to the training data set D (S84) and terminates the processing.

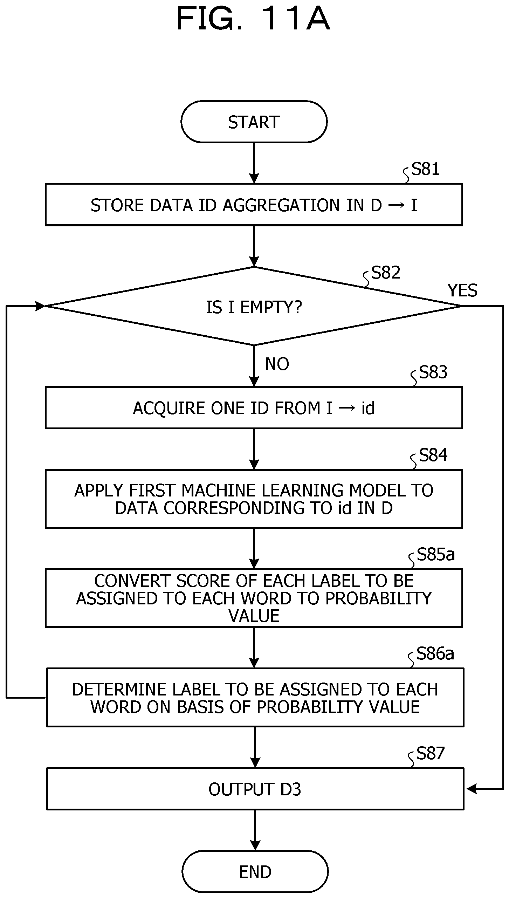

FIG. 11A is a flowchart illustrating a processing example regarding addition of a determination result, and is an example of a case of adding noise to the result output by the first machine learning model M1.

As illustrated in FIG. 11A, when the processing is started, the training data generation unit 32 stores the aggregation of data IDs in the training data set D in the processing array (I) or the like (S81). Next, the training data generation unit 32 determines whether the data ID in the array (I) is empty (S82) and repeats processing of S83 to S86a until the data ID is determined to be empty (S82: Yes).

In a case where the data ID in the array (I) is determined not to be empty (S82: No), the training data generation unit 32 acquires one data ID from the array (I) and stores the acquired data ID in the processing variable (id) (S83). At this time, the training data generation unit 32 deletes the acquired data ID from the array (I).

Next, the training data generation unit 32 applies the first machine learning model M1 to the data corresponding to the variable (id) in the training data set D (S84). Next, the training data generation unit 32 converts the score of each label assigned to each word (case) with respect to the determination result obtained from the first machine learning model M1 into a probability value (S85a). Specifically, the score is converted into the probability value according to the score such that the higher the score, the more likely to be selected. Next, the training data generation unit 32 determines the label to be assigned to each word based on the converted probability value (S86a).

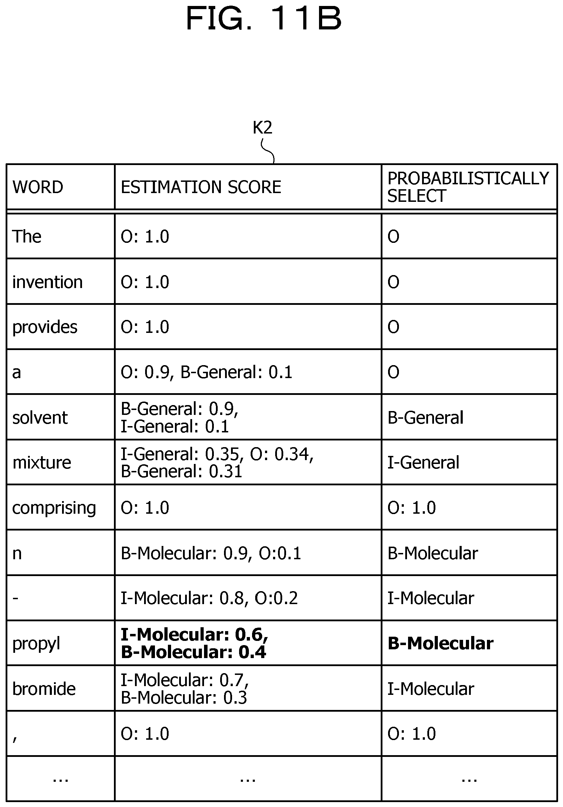

FIG. 11B is an explanatory table for describing an example of result data. Result data K2 in FIG. 11B is a data example in the case where the label is determined based on the probability value after conversion from the score.

As illustrated in FIG. 10B, in the result data K2, the label is probabilistically determined (selected) based on the estimation score converted into the probability value. Therefore, in some cases where the probability values are balanced, a determination result different from the determination result based on the magnitude of the score may be obtained. For example, "propyl" is determined to be "I-Molecular" based on the magnitude of the score, but is determined to be "B-Molecular" by probabilistic selection.

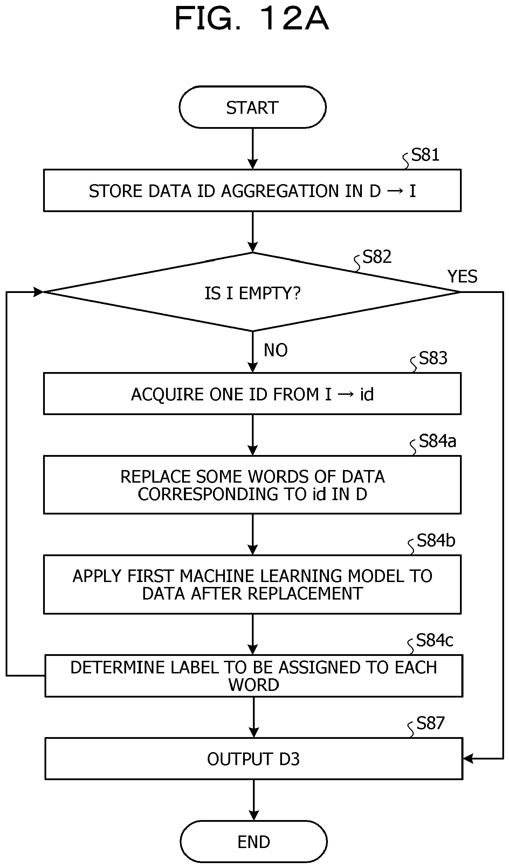

FIG. 12A is a flowchart illustrating a processing example regarding addition of a determination result, and is an example of a case of adding noise to the input of the first machine learning model M1.

As illustrated in FIG. 12A, when the processing is started, the training data generation unit 32 stores the aggregation of data IDs in the training data set D in the processing array (I) or the like (S81). Next, the training data generation unit 32 determines whether the data ID in the array (I) is empty (S82) and repeats processing of S83 to S84c until the data ID is determined to be empty (S82: Yes).

In a case where the data ID in the array (I) is determined not to be empty (S82: No), the training data generation unit 32 acquires one data ID from the array (I) and stores the acquired data ID in the processing variable (id) (S83). At this time, the training data generation unit 32 deletes the acquired data ID from the array (I).

Next, the training data generation unit 32 randomly selects some words of the data corresponding to the variable (id) in the training data set D, and replaces the selected words with other words (S84a). Note that the word to be replaced may be randomly selected from the data or may be selected based on certainty (score) of the estimation result. Furthermore, the replacement with another word may be replacement with any word. Alternatively, the word to be replaced may be replaced with a synonym/related word using a synonym/related word dictionary, or may be replaced with a word selected using word distributed representation.

Next, the training data generation unit 32 applies the first machine learning model M1 to the data after replacement (S84b) and determines the label to be assigned to each word based on the determination result obtained from the first machine learning model M1 (S84c).

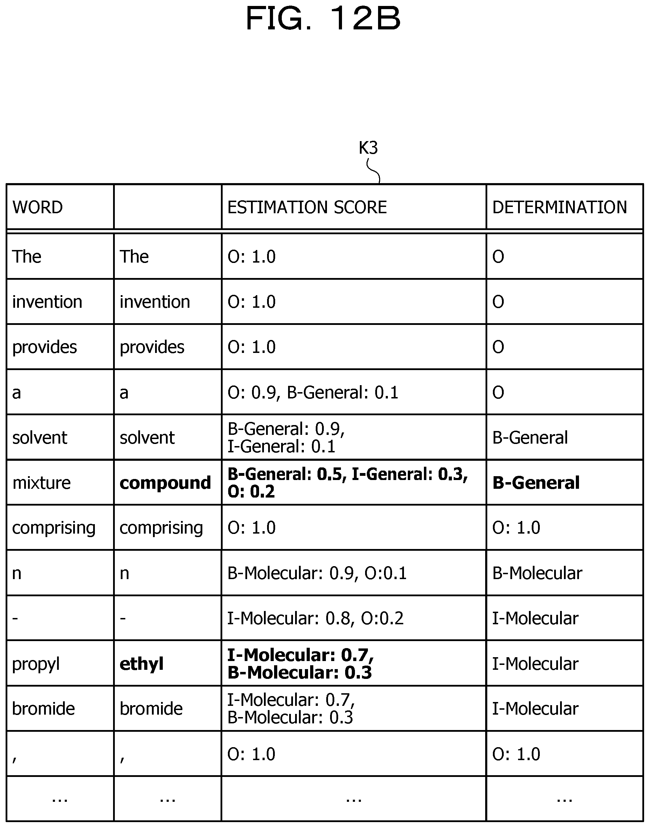

FIG. 12B is an explanatory table for describing an example of result data. Result data K3 in FIG. 12B is a data example in a case where the label is determined based on the word after replacement (the word in the second column).

As illustrated in FIG. 12B, in result data K3, the content of some cases (words) is replaced with another content. For example, "mixture" in the sixth row from the top is replaced with "compound". In this way, noise may be added to the data input to the first machine learning model M1.

As described above, the information processing device 1 has the control unit 30 that executes the processing related to the first machine learning model generation unit 31 and the training data generation unit 32. The first machine learning model generation unit 31 selects a plurality of cases from the training data set D based on the appearance frequency of each case included in the training data set D. Furthermore, the first machine learning model generation unit 31 generates the first machine learning model M1 by machine learning using the plurality of selected cases. The training data generation unit 32 generates the training data set D3 obtained by combining the training data set D and the result output by the first machine learning model M1 in the case of inputting each case included in the training data set D. Furthermore, the control unit 30 executes the processing regarding the second machine learning model generation unit 33 that generates the second machine learning model M2 using the training data set D3. In the classification task of classifying data to be classified, the control unit 30 inputs the data to be classified to the first machine learning model M1 and obtains the output result of the first machine learning model M1. Next, the control unit 30 inputs the output result of the first machine learning model M1 to the second machine learning model M2, and obtains the classification result from the second machine learning model M2. Therefore, it is possible to obtain the classification result that is more accurate than the classification accuracy of a single machine learning model.

Thus, since the information processing device 1 generates the first machine learning model M1 by machine learning using the plurality of cases selected based on the appearance frequency of each case included in the training data set D, the first machine learning model M1 is not repeatedly generated k times when the training data set D3 for training the second machine learning model M2 is generated. Therefore, the information processing device 1 can efficiently generates the training data set D3 for training the second machine learning model M2 and can execute efficient machine learning.

Furthermore, the first machine learning model generation unit 31 excludes the cases in the training data set D from the selection targets, the cases having the appearance frequency less than the threshold. In this way, the information processing device 1 generates the first machine learning model M1 after excluding the cases from the selection targets, the cases having the appearance frequency less than the threshold and having the determination result of the first machine learning model M1 estimated to be unstable in the training data set D. For this reason, in a case where the result output by the first machine learning model M1 is estimated to be unstable in the case where each case included in the training data set D is input, a result different from the correct label of the training data set D is more easily obtained. Therefore, the information processing device 1 can generate the training data set D3 for generating the second machine learning model M2 so as to correct an error in the determination result of the first machine learning model M1, and can improve the accuracy of the final determination result by the second machine learning model M2.

Furthermore, the first machine learning model generation unit 31 calculates the entropy and the self-information amount of each case based on the appearance frequency, and excludes the case having the self-information amount larger than the threshold and the entropy less than the threshold in the training data set D from the selection target. In this way, the information processing device 1 generates the first machine learning model M1 after excluding the cases from the selection targets, the cases having the self-information amount larger than the threshold and the entropy less than the threshold, and having the determination result by the first machine learning model M1 estimated to be unstable in the training data set D. For this reason, in a case where the result output by the first machine learning model M1 is estimated to be unstable in the case where each case included in the training data set D is input, a result different from the correct label of the training data set D is more easily obtained. Therefore, the information processing device 1 can generate the training data set D3 for generating the second machine learning model M2 so as to correct an error in the determination result of the first machine learning model M1, and can improve the accuracy of the final determination result by the second machine learning model M2.

Furthermore, when the training data generation unit 32 generates the training data set D3 for the second machine learning model M2 by combining the training data set and the result output by the first machine learning model M1 in the case of inputting each case included in the data set after some content of each case included in the training data set D is changed. In this way, by changing some content of each case included in the training data set D and adding noise to the training data set D, a result different from the correct label of the training data set D is more easily obtained in the result output by the first machine learning model M1 in the case where the determination result of the first machine learning model M1 is likely to change. Therefore, the information processing device 1 can generate the training data set D3 for generating the second machine learning model M2 so as to correct an error in the determination result of the first machine learning model M1, and can improve the accuracy of the final determination result by the second machine learning model M2.

Furthermore, the training data generation unit 32 adds noise at a specific ratio to the result output by the first machine learning model M1 to generate the training data set D3. In this way, the information processing device 1 may add noise at a specific ratio to the result output by the first machine learning model M1 and generate the training data set D3 for generating the second machine learning model M2 so as to correct the error in the determination result of the first machine learning model M1.

Furthermore, the control unit 30 executes the processing regarding the second machine learning model generation unit 33. The second machine learning model generation unit 33 generates the second machine learning model M2 by machine learning based on the generated training data set D3. Therefore, the information processing device 1 can generate the second machine learning model M2 from the generated training data set D3.

Furthermore, each case included in the training data set D is a word included in each of a plurality of supervised sentences. Therefore, the information processing device 1 efficiently generates the training data set D3 for generating the second machine learning model M2 that outputs part of speech estimation, named entity extraction, word sense determination, or the like of each word contained in the sentence as the final result.

Note that each of the illustrated components in each of the devices does not necessarily have to be physically configured as illustrated in the drawings. In other words, specific modes of distribution or integration of the individual devices are not limited to those illustrated, and all or a part of the devices may be configured by being functionally or physically distributed or integrated in an optional unit depending on various loads, use situations, and the like.

Furthermore, various processing functions executed by the information processing device 1 may be entirely or optionally partially executed by a CPU (or microcomputer such as MPU or micro controller unit (MCU)) or a graphics processing unit (GPU). Furthermore, it goes without saying that all or optional part of the various processing functions may be executed by a program to be analyzed and executed by a CPU (or microcomputer such as MPU or MCU) or a GPU, or hardware using a wired logic. Furthermore, the various processing functions performed by the information processing device 1 may be executed by a plurality of computers in cooperation through cloud computing.

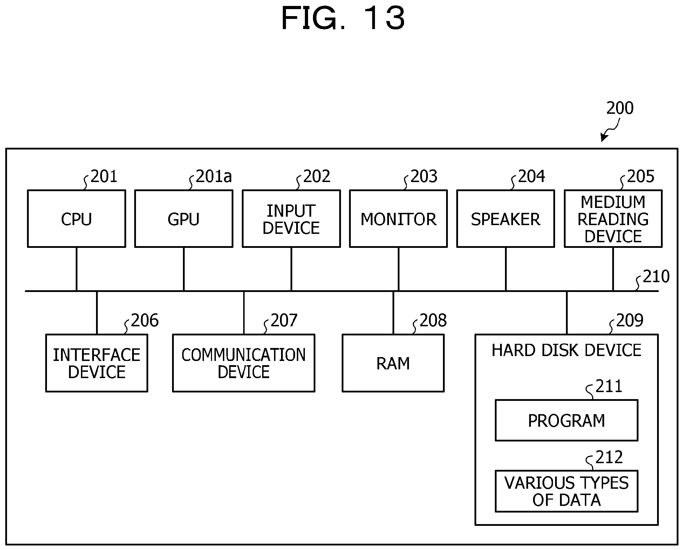

Meanwhile, the various types of processing described in the above embodiments may be implemented by executing a program prepared in advance on a computer. Thus, hereinafter, an example of a computer (hardware) that executes a program having functions similar to the above-described above embodiments will be described. FIG. 13 is a block diagram illustrating an example of a computer configuration.

As illustrated in FIG. 13, a computer 200 includes a CPU 201 that executes various types of arithmetic processing, a GPU 201a that specializes in predetermined arithmetic processing such as image processing and machine learning processing, an input device 202 that receives data input, a monitor 203, and a speaker 204. Furthermore, the computer 200 includes a medium reading device 205 that reads a program and the like from a storage medium, an interface device 206 for being connected to various devices, and a communication device 207 for being connected and communicating with an external device in a wired or wireless manner. Furthermore, the computer 200 includes a random access memory (RAM) 208 that temporarily stores various types of information, and a hard disk device 209. Furthermore, each of the units (201 to 209) in the computer 200 is connected to a bus 210.

The hard disk device 209 stores a program 211 for executing various types of processing in the first machine learning model generation unit 31, the training data generation unit 32, the second machine learning model generation unit 33, and the like in the control unit 30 described in the above-described embodiments. Furthermore, the hard disk device 209 stores various types of data 212 such as the training data set D that the program 211 refers to. The input device 202 accepts, for example, an input of operation information from an operator. The monitor 203 displays, for example, various screens operated by the operator. For example, the interface device 206 is connected to a printing device or the like. The communication device 207 is connected to a communication network such as a local area network (LAN) and exchanges various types of information with an external device via the communication network.

The CPU 201 or GPU 201a performs the various types of processing related to the first machine learning model generation unit 31, the training data generation unit 32, the second machine learning model generation unit 33, and the like by reading the program 211 stored in the hard disk device 209, expands the program 211 in the RAM 208, and executes the program 211. Note that the program 211 does not have to be stored in the hard disk device 209. For example, the program 211 stored in a storage medium readable by the computer 200 may be read and executed. For example, the storage medium readable by the computer 200 corresponds to a portable recording medium such as a compact disc read only memory (CD-ROM), a digital versatile disc (DVD), or a universal serial bus (USB) memory, a semiconductor memory such as a flash memory, a hard disk drive, or the like. Alternatively, the program 211 may be stored in a device connected to a public line, the Internet, a LAN, or the like, and the computer 200 may read the program 211 from the device and execute the program 211.

### REFERENCE SIGNS LIST

- 1: Information processing device
- 10: Input/output unit
- 20: Storage unit
- 21: First machine learning model information
- 22: Second machine learning model information
- 30: Control unit
- 31: First machine learning model generation unit
- 32: Training data generation unit
- 33: Second machine learning model generation unit
- 200: Computer
- 201: CPU
- 201a: GPU
- 202: Input device
- 203: Monitor
- 204: Speaker
- 205: Medium reading device
- 206: Interface device
- 207: Communication device
- 208: RAM
- 209: Hard disk device
- 210: Bus
- 211: Program
- 212: Various types of data
- D, D1 to D3, D100, D101: Training data set
- K1 to K3: Result data
- M1, M101: First machine learning model
- M2, M102: Second machine learning model
- S_{f}: Appearance frequency data
- Sₕ: Entropy data
- Sᵢ: Self-information amount data
- S_{d}: Score data

## Claims

1. A machine learning program that causes a computer to execute a process, the process comprising:
selecting a plurality of data from a first training data group based on an appearance frequency of same data with a same label attached included in the first training data group;
generating a first machine learning model by machine learning that uses the plurality of selected data; and
generating a second training data group obtained by combining the first training data group and a result output by the first machine learning model in a case where the data included in the first training data group is input.

2. The machine learning program according to claim 1, wherein
the selecting includes excluding data with the appearance frequency less than a threshold, of the first training data group, from a selection target.

3. The machine learning program according to claim 1, wherein
the selecting includes calculating entropy and self-information amount of the same data with the same label attached based on the appearance frequency, and excluding data with the self-information amount larger than a first threshold and the entropy less than a second threshold, of the first training data group, from the selection target.

4. The machine learning program according to claim 1, wherein
the generating the second training data group includes generating the second training data group by combining the first training data group and a first result output by the first machine learning model in a case where second data generated by changing content of first data included in the first training data group is input.

5. The machine learning program according to claim 1, wherein
the generating the second training data group includes generating the second training data group by combining the first training data group and a second result generated by changing content of a first result output by the first machine learning model in a case where first data included in the first training data group is input.

6. The machine learning program according to claim 1, wherein the process further comprising
generating a second machine learning model by machine learning based on the generated second training data group.

7. A machine learning method executed by a computer, the machine learning method comprising:
selecting a plurality of data from a first training data group based on an appearance frequency of same data with a same label attached included in the first training data group;
generating a first machine learning model by machine learning that uses the plurality of selected data; and
generating a second training data group obtained by combining the first training data group and a result output by the first machine learning model in a case where the data included in the first training data group is input.

8. The machine learning method according to claim 7, wherein
the selecting includes excluding data with the appearance frequency less than a threshold, of the first training data group, from a selection target.

9. The machine learning method according to claim 7, wherein
the selecting includes calculating entropy and self-information amount of the same data with the same label attached based on the appearance frequency, and excluding data with the self-information amount larger than a first threshold and the entropy less than a second threshold, of the first training data group, from the selection target.

10. The machine learning method according to claim 7, wherein
the generating the second training data group includes generating the second training data group by combining the first training data group and a first result output by the first machine learning model in a case where second data generated by changing content of first data included in the first training data group is input.

11. The machine learning method according to claim 7, wherein
the generating the second training data group includes generating the second training data group by combining the first training data group and a second result generated by changing content of a first result output by the first machine learning model in a case where first data included in the first training data group is input.

12. The machine learning method according to claim 7, further comprising
generating a second machine learning model by machine learning based on the generated second training data group.

13. An information processing device comprising:
a control unit configured to execute processing of:
selecting a plurality of data from a first training data group based on an appearance frequency of same data with a same label attached included in the first training data group;
generating a first machine learning model by machine learning that uses the plurality of selected data; and
generating a second training data group obtained by combining the first training data group and a result output by the first machine learning model in a case where the data included in the first training data group is input.

14. The information processing device according to claim 13, wherein the processing of selecting includes processing of excluding data with the appearance frequency less than a threshold, of the first training data group, from a selection target.

15. The information processing device according to claim 13, wherein the processing of selecting includes processing of calculating entropy and self-information amount of the same data with the same label attached based on the appearance frequency, and excluding data with the self-information amount larger than a first threshold and the entropy less than a second threshold, of the first training data group, from the selection target.

16. The information processing device according to claim 13, wherein the processing of generating the second training data group includes processing of generating the second training data group by combining the first training data group and a first result output by the first machine learning model in a case where second data generated by changing content of first data included in the first training data group is input.

17. The information processing device according to claim 13, wherein the processing of generating the second training data group includes processing of generating the second training data group by combining the first training data group and a second result generated by changing content of a first result output by the first machine learning model in a case where first data included in the first training data group is input.

18. The information processing device according to claim 13, wherein the control unit further executes processing of generating a second machine learning model by machine learning based on the generated second training data group.
